# EUROPEAN PATENT APPLICATION

(11) **EP 4 686 734 A1**
(43) Date of publication of application: **04.02.2026**
(21) Application number: 25188152.0
(22) Date of filing: 08.07.2025
(51) Int. Cl.: C08K 5/03, C08J 11/04

(54) **ASPHALT REJUVENATING ADDITIVES PRODUCED FROM WASTE PLASTIC PYROLYSIS PRODUCTS**

(30) Priority: 29.07.2024 US 202418787782
(71) Applicant: Baker Hughes Oilfield Operations LLC, Houston, TX 77073 (US)
(72) Inventor: RESPINI, Marco, Houston, 77073 (US)
(74) Representative: Dehns

(57) **Abstract**

An asphalt rejuvenator is prepared from aromatic compounds derived from the heavy distillates of waste plastic pyrolysis. The aromatic compounds are strategically selected based on a comparison of solubility parameters of the aromatic compounds and the bitumen binder of the asphalt. The aromatic compounds can be selected by controlling the distillation of the heavy distillates of the pyrolysis process. Suitable aromatic compounds include alkyl-naphthalene, alkyl-anthracene, alkyl-phenanthrene, phenolic alkyl aromatic compounds, phenolic alkyl polynuclear aromatic compounds, and alkyl polynuclear aromatic compounds.

## Description

### FIELD OF THE INVENTION

This disclosure relates generally to the methods for recycling and rejuvenating asphalts capable of use in paving applications and to additives useful in rejuvenating recycled asphalts.

### BACKGROUND OF THE INVENTION

Asphalt or "asphalt concrete" is ubiquitous as a road paving material. Asphalt is typically produced by combining aggregates with a bitumen-based binder. Additives can be added to the bitumen-aggregate blend to imbue the asphalt with favorable properties that are tailored to specific applications, such as improved flexibility and resistance to degradation from solar radiation. Nonetheless, asphalt undergoes an oxidative aging process in which the bitumen binder becomes more viscous, stiffer and brittle as the bitumen shifts from a sol-type emulsion to a gel-type emulsion dominated by largely insoluble asphaltenes. These changes to the properties of the bitumen binder can lead to asphalt cracking, pitting and other forms of fatigue failure.

In most cases, asphalt concrete that has reached the end of its service life is removed, discarded, and then replaced with new asphalt formulated from new materials. Asphalt production requires a significant volume of raw materials, many of which are obtained through the recovery of crude oil from subterranean reservoirs. To reduce the need for raw materials and the burden of disposing exhausted asphalt, there is significant interest in developing systems and methods for recycling and rejuvenating asphalt. The recovery and reuse of the bituminous binder is an important aspect of asphalt recycling.

A key consideration in the recycling of asphalt is the solubility of various additives with the aged bitumen binder. It is known in the art that solubility parameters of streams containing asphaltenes are related to the capability of the oil matrix to disperse/solvate asphaltenes and the tendency of asphaltenes to precipitate from the stream solvating them. Solubility parameters are a thermodynamic quantity related to cohesive energy and applied to determine solubilities of compounds in solvents. These solubility parameters are often respectively reported as a solubility blending number (SBn) related to the stream solubility parameter and an insolubility number (In), which is solubility parameter of the asphaltenes in the stream.

It is known in the art to determine the SBn and In parameters based on the Heithaeus p-value three-dilutions procedure, whereby flocculation is measured on the pure stream containing asphaltenes (crude, residuum) and on the same sample diluted with an aromatic solvent (usually toluene). For example, this technique is generally described in United States Patent Application Publication No. 2013/0341241 and assigned to Baker Hughes Incorporated and United States Patent Application Publication No. 2017/0227433 assigned to Baker Hughes Holdings LLC, the contents of which are incorporated by reference herein in their entirety.

Additives for recycled bitumen are typically designed to decrease the viscosity of the bitumen, which has a "softening" effect on the resulting asphalt. These additives, which are also referred to as rejuvenators, are added as fluxants to the recovered asphalt to optimize the restoration of the original bituminous binder properties. When successful, these additives make the asphalt flexible again and improve adhesion between the bitumen and aggregate. This softening effect can be achieved by shifting the bitumen binder toward a sol-type emulsion by better dispersing the asphaltenes within the bitumen binder.

Additives that are rich in polynuclear aromatics (PNAs) tend to be good solvents for asphaltenes present in the bitumen. For this reason, fuel catalyst cracking (FCC) oils and steam cracking pyrolysis fuel oils rich in polynuclear aromatics are good recycling additives because these oils have a beneficial impact on the sol-gel phase behavior of the bitumen binder emulsion. In particular, the polynuclear aromatics have proven useful at the solvation of heavier components of the bitumen binder, including asphaltenes and high molecular weight aromatic hydrocarbons or resins.

In the past, the usefulness of FCC oils and steam cracking pyrolysis oils as additives for rejuvenating bitumen binders has been determined by examining the concentration of heavier resins and aromatics in these oils. It has been recently determined, however, that using solubility parameters is a better indicator of whether a particular additive will prove useful in rejuvenating the bitumen binder. Predicting which compounds will blend well with the aged bitumen and produce a rejuvenating effect on the bitumen is challenging, particularly for the use of novel additives. Accordingly, there is a need for processes for identifying and formulating additives for use in connection with bitumen recovered as part of an asphalt recycling process. It is to this and objects that that embodiments of the present disclosure are directed.

### SUMMARY OF THE INVENTION

In some embodiments, the present disclosure is directed to an additive for restoring properties to a bitumen binder used for asphalt, where the additive is derived from waste plastic pyrolysis. In some embodiments, the additive includes one or more alkyl polynuclear aromatic compounds that each include 2 or 3 condensed rings. Suitable alkyl polynuclear aromatic compounds include alkyl-naphthalene, alkyl-anthracene and alkyl-phenanthrene. In some embodiments, the additive includes one or more aromatic compounds such as phenolic alkyl aromatic compounds, phenolic alkyl polynuclear aromatic compounds, and combinations of phenolic alkyl aromatic compounds and phenolic alkyl polynuclear aromatic compounds.

In other aspects, the present disclosure is directed to a method for making an asphalt additive. The method includes the steps of obtaining a volume of bitumen binder, determining the solubility parameters of the volume of bitumen binder, obtaining a volume of heavy distillates from a waste plastic pyrolysis process, and identifying one or more aromatic compounds in the volume of heavy distillates from the waste plastic pyrolysis process. The method continues with the steps of determining the solubility parameters for the one or more aromatic compounds, confirming that the solubility parameters for the one or more aromatic compounds are complementary to the solubility parameters of the volume of bitumen binder, and isolating the one or more aromatic compounds for use as the asphalt additive.

A method for producing rejuvenated asphalt using products from a waste plastic pyrolysis process includes the steps of obtaining a volume of heavy distillates from a waste plastic pyrolysis process, identifying one or more aromatic compounds in the volume of heavy distillates from the waste plastic pyrolysis process, and determining the solubility parameters for the one or more aromatic compounds. The method continues with the steps of removing oxidized asphalt from a surface exposed to solar radiation, separating spent bitumen binder from aggregate in the oxidized asphalt and determining the solubility parameters of the spent bitumen binder. The method continues with the steps of comparing the solubility parameters for the one or more aromatic compounds with the solubility parameters of the volume of bitumen binder to identify a complementary match of solubility parameters, isolating the one or more aromatic compounds with complementary solubility parameters for use as an asphalt additive, and adding the asphalt additive to the spent bitumen binder to produce a restored bitumen binder. The method optionally includes the step of adding the restored bitumen binder to the aggregate to produce the rejuvenated asphalt.

### BRIEF DESCRIPTION OF DRAWINGS

FIG. 1 is a bar graph comparing Solubility Blending Number ranges of bitumens and fluxants.
FIG. 2 is a bar graph comparing the typical Insolubility Number ranges of bitumens and fluxants.

### DETAILED DESCRIPTION

It is well known that the large amount of waste plastic in the world presents a significant disposal problem with adverse effects on the environment. One approach for dealing with waste plastics is through conversion of waste plastic to lower molecular weight hydrocarbon materials. The decomposition of hydrocarbon polymers of waste plastics, which can have high molecular weights (i.e., long carbon-chain lengths), can yield lower molecular-weight hydrocarbons (i.e., shorter carbon-chain lengths) that may be useful as fuels or other additives. Producing valuable low molecular weight hydrocarbon materials from the pyrolysis (thermal decomposition) of waste plastic may have environmental benefits both from less reliance on traditional production processes that are pollutive and reduced levels of plastic waste sent to landfills or incinerated.

The residua of waste plastic pyrolysis typically contain considerable unwanted contaminants, including solids. These solids are not soluble in the residue matrix. The contaminants are unconvertible products of polymer processes and pyrolysis by-products that behave like insoluble coke. They also contain fouling material made of mostly insoluble polynuclear aromatics and small unconverted polymers which makes these waste plastic pyrolysis products difficult for further processing at refinery units (e.g., crude units, thermal cracking units, hydrocracking units, etc.). These organic solids can contain a high level of metals; namely, metals coming from the catalysts left in the plastic matrix during polymerizations or from plastic additives. This residue is typically about 10% of the feed to the conversion units for pyrolysis/thermal decomposition waste plastic processes. A need therefore exists for identifying a beneficial use of the heavy distillates produced by waste plastic pyrolysis processes.

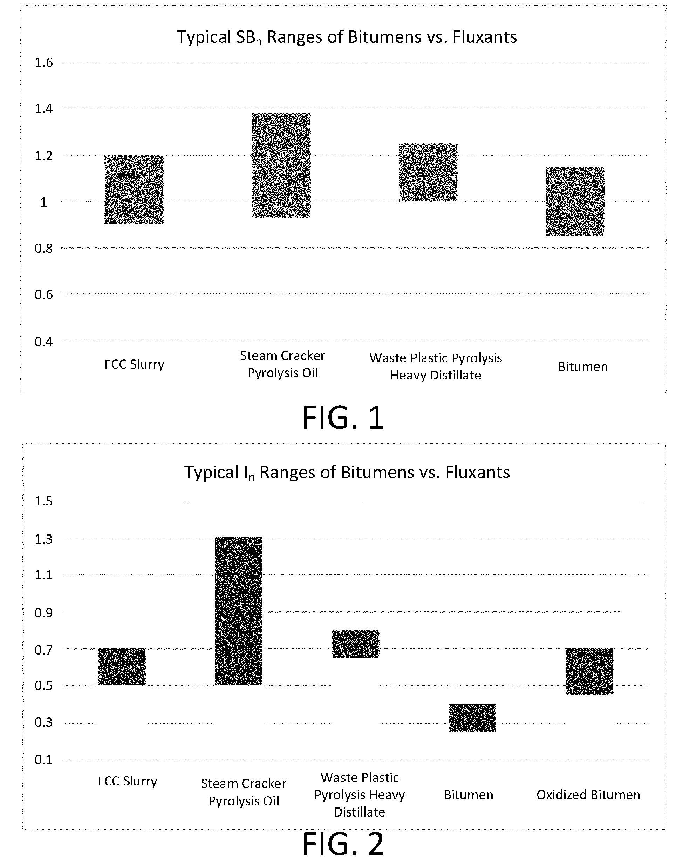

It has been recently discovered that certain heavy distillates produced by waste plastic pyrolysis contain several compounds that are capable of acting as rejuvenating additives for bitumen binders. It has been determined that aromatic resins and polynuclear aromatic compounds derived from the heavy distillates from waste plastic pyrolysis have Solubility Blending numbers (SBn) that are similar to the solubility parameters for the aged asphaltenes found in spent bitumen binder from asphalt, as illustrated in FIG. 1. The Insolubility numbers (In) for waste plastic heavy distillates are significantly different from fresh bitumen and only slightly overlap the insolubility numbers for oxidized bitumen, as illustrated in FIG. 2. This indicates that these aromatic compounds present in the heavy distillate portion of the products of waste plastic pyrolysis can be effective solvents for the asphaltenes found in spent bitumen binder. These aromatic compounds recovered from the heavy distillates produced by waste plastic pyrolysis can be selected by controlling the fundamental pyrolysis process or through subsequent distillation of the heavy distillates produced by the pyrolysis process. These solubility parameters can be used to determine a range of effective concentration ratios between the bitumen binder and the aromatic components from the heavy distillate portion of the waste plastic pyrolysis stream.

Thus, in accordance with certain embodiments, a rejuvenating additive for use with bitumen-based asphalt binders is derived from the selected distillation of heavy distillates produced from a precursor pyrolysis of waste plastic. **In** some embodiments the rejuvenating additive includes one or more polynuclear aromatics. **In** some embodiments, the rejuvenating additive includes one or more polynuclear aromatics with 2-3 condensed rings. Suitable polynuclear aromatics with 2-3 condensed rings include alkyl-naphthalene, alkyl-anthracene and alkyl-phenanthrene.

**In** other embodiments, the rejuvenating additive includes phenolic alkyl aromatics, phenolic alkyl polynuclear aromatics, or a combination of phenolic alkyl aromatics, phenolic alkyl polynuclear aromatics. These phenolic compounds act as antioxidants for mitigating oxidation and consequent ageing for the rejuvenated bitumen. It will be appreciated that in some embodiments, one or more of these phenolic compounds can be used in combination with one or more alkyl polynuclear aromatic compounds disclosed herein.

In another aspect, illustrative embodiments include a method for producing the rejuvenating additives useful in restoring one or more properties of a target bitumen binder, which can be aged (spent) or fresh. The method generally involves the steps of determining the solubility parameters of the target bitumen binder, identifying an appropriate rejuvenating additive based on the solubility parameters of the target bitumen binder and the complementary solubility parameters of the various products of the waste pyrolysis stream, isolating the identified rejuvenating additive from the products of the waste plastic pyrolysis stream, and adding the selected rejuvenating additive to the bitumen binder to impart one or more qualities to the bitumen binder.

In the first step, the solubility parameters for various compounds are determined by solvating the target bitumen binder in an aromatic solvent, such as methylnaphthalene or toluene, and then precipitating or agglomerating the asphaltenes and other heavy aromatic portions by progressively adding a precipitant, such as iso-octane, n-heptane or hexadecane, to the solvated bitumen. The detection of the asphaltenes precipitation can be based on different measurements, for example by optical microscopy or by turbidimetric light scattering, which may produce more accurate results.

When the precipitation or agglomeration starts, the ratios of (i) precipitants to bitumen; and (ii) bitumen to solvent are recorded. Repeating this test with at least three different dilutions of solvated bitumen permits the calculation of the solubility blending number (SBn) and insolubility number (In), which express the solubility parameters of the target bitumen binder and the most insoluble components, the asphaltenic and heavy polynuclear aromatic portions. These solubility and insolubility tests can be run across a range of target bitumen binders and for a variety of heavy distillate products from the pyrolysis of waste plastics to determine which heavy distillate products are most likely to be compatible with a given target bitumen binder.

Once the solubility and insolubility characteristics have been established for a target bitumen binder and the available heavy distillate portions of the waste plastic pyrolysis products, components for an appropriate rejuvenating additive are selected and isolated from the waste plastic pyrolysis stream. The rejuvenating additive is then formulated using the selected waste plastic pyrolysis products. The formulated rejuvenating additive is then added in an appropriate concentration to the target bitumen binder based on the solubility and insolubility analyses, such that the rejuvenating additive beneficially impacts one or more characteristics of the target bitumen binder.

In another aspect, illustrative embodiments include a method for recycling bitumen-based asphalt. As discussed above, bitumen binders used in asphalt degrade over time due to oxidation and structural changes in the binder. In particular, bitumen binders lose flexibility and resiliency as beneficial resins in the binder are converted into asphaltenic components and the binder undergoes structural changes related to intermolecular associations of asphaltenes. As disclosed herein, the aged asphalt can be recycled by improving the aged bitumen binder with a rejuvenating additive.

The method begins with the step of removing the aged asphalt from the road. Next, the method includes the step of separating the aged bitumen binder from the aggregate in the removed asphalt. The aged bitumen binder can typically be separated from the aggregate in the asphalt through a combination of heat and mechanical agitation. The method continues with the step of evaluating the recovered bitumen binder to determine the applicable solubility and insolubility parameters as described herein.

Once the recovered bitumen binder has been examined, a suitable rejuvenating additive can be formulated using the heavy distillate portion of the products of the pyrolysis of waste plastic. The method includes the step of selecting the appropriate heavy distillate components to match the solubility and insolubility parameters for the recovered bitumen binder. The appropriate heavy distillate components can be selected by controlling the parameters of the distillation of the heavy distillate components. For example, in some embodiments, the heavy distillates created by the pyrolysis of waste plastic are processed to yield an appropriate blend of polynuclear aromatics that are designed to shift the gel-type emulsion dominated by largely insoluble asphaltenes in the aged bitumen binder back to a rejuvenated bitumen binder characterized by a less viscous sol-type emulsion that can be used to produce a more compliant asphalt. The rejuvenating additive is soluble in the bitumen binder and restores the colloidal structure and solvation of asphaltenes in the binder. The asphalt recycling method concludes with the step of combining the rejuvenated bitumen binder with fresh or recovered aggregate to produce recycled asphalt. The asphalt recycling method is beneficial because it reduces the amount of raw bitumen required for asphalt applications.

It is to be understood that even though numerous characteristics and advantages of various embodiments of the present invention have been set forth in the foregoing description, together with details of the structure and functions of various embodiments of the invention, this disclosure is illustrative only, and changes may be made in detail, especially in matters of structure and arrangement of parts and steps within the principles of the present invention to the full extent indicated by the broad general meaning of the terms in which the appended claims are expressed. It will be further appreciated that unless otherwise excluded, aspects of one embodiment can be combined or incorporated into other embodiments disclosed herein. It will be appreciated by those skilled in the art that the teachings of the present invention can be applied to other systems without departing from the scope and spirit of the present invention.

## Claims

1. An additive for restoring properties to a bitumen binder used for asphalt, wherein the additive is derived from waste plastic pyrolysis.

2. The additive of claim 1, wherein the additive comprises one or more alkyl polynuclear aromatic compounds; and
wherein the additive comprises phenolic alkyl aromatic compounds, phenolic alkyl polynuclear aromatic compounds, or a combination of phenolic alkyl aromatic compounds and phenolic alkyl polynuclear aromatic compounds.

3. The additive of claim 2, wherein the one or more alkyl polynuclear aromatic compounds each comprise 2 or 3 condensed rings.

4. The additive of claim 3, wherein the one or more alkyl polynuclear aromatic compounds with 2 or 3 condensed rings are selected from the group consisting of alkyl-naphthalene, alkyl-anthracene and alkyl-phenanthrene.

5. The additive of claim 4, wherein the additive further comprises one or more alkyl polynuclear aromatic compounds.

6. The additive of claim 5, wherein the one or more alkyl polynuclear aromatic compounds with 2-3 condensed rings.

7. The additive of claim 6, wherein the alkyl polynuclear aromatic compounds are selected from the group consisting of alkyl-naphthalene, alkyl-anthracene and alkyl-phenanthrene.

8. The additive of claim 2, wherein the one or more alkyl polynuclear aromatic compounds are produced from heavy distillates of the waste plastic pyrolysis.

9. The additive of claim 8, wherein the one or more alkyl polynuclear aromatic compounds are produced from a selective distillation of the heavy distillates of the waste plastic pyrolysis.

10. A method for making an asphalt additive, the method comprising the steps of:
obtaining a volume of bitumen binder;
determining the solubility parameters of the volume of bitumen binder;
obtaining a volume of heavy distillates from a waste plastic pyrolysis process;
identifying one or more aromatic compounds in the volume of heavy distillates from the waste plastic pyrolysis process;
determining the solubility parameters for the one or more aromatic compounds;
confirming that the solubility parameters for the one or more aromatic compounds are complementary to the solubility parameters of the volume of bitumen binder; and
isolating the one or more aromatic compounds for use as the asphalt additive.

11. The method of claim 10, wherein the step of obtaining the volume of bitumen further comprises obtaining a volume of oxidized bitumen previously used in asphalt; and wherein the step of determining the solubility parameters of the bitumen binder comprises:
solvating the bitumen binder in an aromatic solvent; and
precipitating asphaltenes by progressively adding a precipitant to the solvating bitumen binder.

12. The method of claim 11, further comprising the step of detecting the precipitation of asphaltenes through a technique selected from the group consisting of optical microscopy or by turbidimetric light scattering.

13. A method for producing rejuvenated asphalt using products from a waste plastic pyrolysis process, the method comprising the steps of:
obtaining a volume of heavy distillates from a waste plastic pyrolysis process;
identifying one or more aromatic compounds in the volume of heavy distillates from the waste plastic pyrolysis process;
determining the solubility parameters for the one or more aromatic compounds;
removing oxidized asphalt from a surface exposed to solar radiation;
separating spent bitumen binder from aggregate in the oxidized asphalt;
determining the solubility parameters of the spent bitumen binder;
comparing the solubility parameters for the one or more aromatic compounds with the solubility parameters of the volume of bitumen binder to identify a complementary match of solubility parameters;
isolating the one or more aromatic compounds for use as an asphalt additive;
adding the asphalt additive to the spent bitumen binder to produce a restored bitumen binder; and
adding the restored bitumen binder to the aggregate to produce the rejuvenated asphalt.

14. The method of claim 13, wherein the step of identifying the one or more aromatic compounds in the volume of heavy distillates from the waste plastic pyrolysis process further comprises identifying phenolic alkyl aromatic compounds, phenolic alkyl polynuclear aromatic compounds, or a combination of phenolic alkyl aromatic compounds and phenolic alkyl polynuclear aromatic compounds in the volume of heavy distillates from the waste plastic pyrolysis process;
wherein the step of identifying the one or more polynuclear aromatic compounds in the volume of heavy distillates from the waste plastic pyrolysis process further comprises identifying one or more alkyl polynuclear aromatic compounds with 2-3 condensed rings; and
wherein the step of identifying the one or more polynuclear aromatic compounds in the volume of heavy distillates from the waste plastic pyrolysis process further comprises identifying a combination of phenolic alkyl aromatic compounds, phenolic alkyl polynuclear aromatic compounds, and alkyl polynuclear aromatic compounds.

15. The method of claim 14, wherein the step of identifying the one or more polynuclear aromatic compounds in the volume of heavy distillates from the waste plastic pyrolysis process further comprises identifying one or more alkyl polynuclear aromatic compounds selected from the group consisting of alkyl-naphthalene, alkyl-anthracene and alkyl-phenanthrene.
